(19) Europäisches Patentamt
European Patent Office
Office européen des brevets

(11) **EP 1 775 958 A1**

(12) **EUROPEAN PATENT APPLICATION**

(43) Date of publication:
**18.04.2007 Bulletin 2007/16**

(51) Int Cl.:
*H04N 7/26* (2006.01)     *H04N 7/46* (2006.01)
*H04N 7/50* (2006.01)     *G06T 5/00* (2006.01)
*G06T 5/20* (2006.01)

(21) Application number: **05300818.1**

(22) Date of filing: **14.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
• **Chen, Ying,**
  **Bld. 3, 103 Chenghua Yuan**
  **100083, Beijing (CN)**
• **Vieron, Jerome**
  **35000, Rennes (FR)**

(74) Representative: **Rittner, Karsten**
  **Deutsche Thomson-Brandt GmbH,**
  **Karl-Wiechert-Allee 74**
  **30625 Hannover (DE)**

(54) **Method and apparatus for reconstructing the texture of a spatial enhancement-layer video picture**

(57)     Two texture prediction techniques used in Scalable Video Coding for reducing the redundancy between the spatial layers are upsampling of the reconstructed BL texture and upsampling of the BL residual. ESS aims at non-dyadic upsampling factors. A method for interpolating EL pixels (Q1,H,Q2) from BL pixels (E-2,E-1,E0,E1,E2,E3) comprises upsampling the BL elements (E-2,E-1,EO,E1,E2,E3) for usage as upsampled elements of the EL image, and if the BL image is a reconstructed image, then predicting according to the given upsampling factor sub-pel pixels (Q1,H,Q2) of the EL image by an interpolation based on n BL pixels (E-2,E-1,E0, E1,E2,E3), wherein different interpolation filters are used and wherein the respective filter coefficients approximate a windowed Lanczos-3 function.

Fig.1

**Description**

Field of the invention

This invention relates to a method and an apparatus for reconstructing the texture of a spatial enhancement-layer (EL) picture in a scalable video environment.

Background

Scalable video coding (SVC) is an enhancement to the MPEG-4 standard for Advanced Video Coding (AVC), using prediction of texture and motion between temporally neighboring frames (inter) and among the spatial layers of temporally same frames (intra). SVC includes Extended Spatial Scalability (ESS), meaning that the higher-resolution enhancement-layer (EL) needs not have double width and height of the low-resolution base-layer (BL), but the ratio can be any between 1 and 2. Thus, it is non-dyadic.

Two texture prediction techniques ESS uses for reducing the redundancy between the spatial layers are upsampling of the reconstructed BL texture, and upsampling of the BL residual if available. Both are performed on macroblock (MB) level by similar processes comprising interpolation between 6 neighboring values and then bilinear interpolation.
The two EL texture components, the reconstructed BL picture and the upsampled BL residual, are called reconstruction and residual.

If BL and EL use residuals, the residual of the BL and that of the EL have different resolution, with a factor ranging from 1 to 2.

For SVC non-dyadic spatial scalability, texture prediction is a composition of two processes, as described eg. in the European Patent Application EP05075870. The BL texture is first upsampled with the AVC 6-tap filter, and the result is then interpolated with a bilinear filter. The texture is actually upsampled by 4 in these two steps. The resulting 1/4 pel (Q-pel) texture is used as a prediction for the EL, which has a counterpart of low-resolution BL with a ratio value between 1 and 2. Actually the counterpart position of a BL pixel would be in an arbitrary position, but quantizes into a 1/4 x 1/4 lattice. For intra texture prediction, the interpolation filter is applied across transform block boundaries, while for residual texture prediction the filtering works only inside transform blocks.

The residual upsampling process in the conventional dyadic case uses average bilinear filtering, just like the process for getting the Q-pel picture motion vectors. However, conventional dyadic interpolation is not accurate enough for residual upsampling in ESS.

The described upsampling method is however rather inaccurate and complicated, and therefore inefficient.

Summary of the Invention

The present invention provides a simplified texture upsampling technique for ESS. Besides, the disclosed texture upsampling technique for a reconstructed BL frame is more accurate than known methods.

According to the invention, different techniques are used for reconstruction and residual of the BL, wherein both include single step (ie. direct) upsampling by 4. The difference is that the filter for reconstruction upsampling is based on a 3-lobed Lanczos function, and the residual upsampling is based on bilinear filters. Half-pel and Q-pel pixels for the upsampled texture are generated by 6-tap filters using the neighboring 6 integer pixels, and half-pel and Q-pel pixels for the residual are generated by simple bilinear filters. Usage of short interpolation filters for residual upsampling is advantageous because the residual has many details.

Usage of 6-tap filters for reconstruction upsampling provides more efficiency and lower complexity, while usage of short interpolation filters for residual upsampling provides more efficiency, particularly for big upsampling filters for eg. 6-, 8- or 12-times upsampling. The purpose of 6-,8- or 12-times upsampling is to give a more accurate upsampled picture. Since any ratio between two layers shall be enabled, a low resolution layer point corresponding to a given high resolution layer point will have non-integer coordinates, eg. (1.37, 1.63). The point will eventually be quantized eg. to a lattice of $(m/2^k, n/2^k)$. For 12-times upsampling, it can be quantized to $(m/12, n/12)$, where m and n are integers.

The direct upsampling techniques for reconstruction and residual upsampling provide for low complexity encoding and decoding and are more efficient and more accurate than known solutions. For further reduction of the encoder/decoder complexity, the principles of the invention are also usable for frame level residual interpolation.

Since in JVT (Joint Video Team) the upsampled motion is also quantized into 1/4 pel accuracy, JVT decided to just keep for the upsampled texture also 1/4 pel accuracy, corresponding to an upsampling factor of 4. However, the principle of the invention is applicable for any upsampling factor. The present invention provides filters for more accurate reconstruction interpolation that focus on upsampling by factors of 6, 8 and 12 respectively.

According to the invention, a method for interpolating elements of an EL image from elements of a BL image, where the EL has higher resolution than the BL, comprises the steps of

upsampling said elements of the BL image for usage as upsampled elements of the EL image, and

if the BL image is a reconstructed image, then predicting according to a given upsampling factor further elements of the EL image by a first interpolation based on n of said elements of the BL image, with n being two or more, wherein the predicted further elements are positioned between said upsampled elements, and wherein for the further elements different interpolation filters are used, and wherein the respective filter coefficients approximate a windowed sinc (sin (x) /x) based function.

The elements will usually be pixels or macroblocks.

In one embodiment of the invention, the upsampling factor, i.e. the resolution ratio between BL and EL, is not a power of two, but can be any value.

In one embodiment of the invention, said upsampled elements are all in the same line of the EL image, and the predicted further elements are adjacent to each other and are positioned between two of said upsampled elements.

In one embodiment of the invention, the coefficients of each of the filters approximate different phases of the same function.

In one embodiment of the invention, the coefficients of each of the filters approximate a 3-lobed Lanczos windowed sinc function (Lanczos-3).

In one embodiment of the invention n is 6, ie. 6-tap filters are used, independent from the upsampling factor.

Advantageous embodiments of the invention are disclosed in the dependent claims, the following description and the figures.

Brief description of the drawings

Exemplary embodiments of the invention are described with reference to the accompanying drawings, which show in

Fig.1 direct upsampling by 4 versus 2-step sequential upsampling by 2;

Fig.2 interpolation of half-pel and Q-pel pixels based on 6 integer pixels;

Fig.3 interpolation of half-pel and Q-pel pixels based on 2 integer pixels; and

Fig.4 structure of single-step 6-tap interpolation filters.

Detailed description of the invention

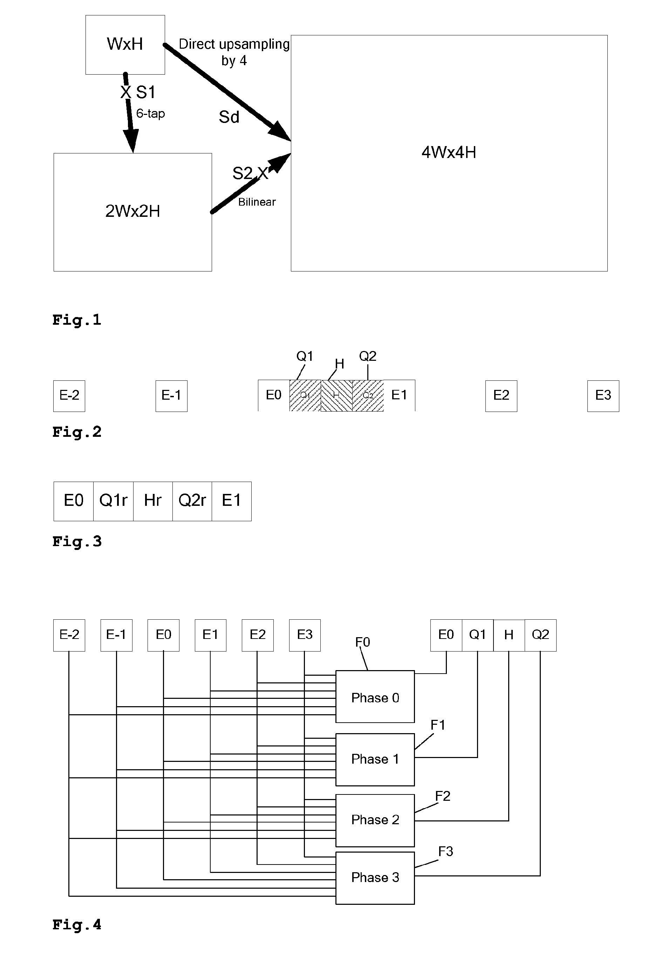

Fig.1 shows upsampling by a factor of 4 for a reconstructed BL picture (reconstruction), or residual upsampling for a residual picture respectively. Both these upsampling processes were conventionally performed in two steps S1,S2, but according to the invention can be performed as direct upsampling in single steps Sd. Advantageously, in this manner non-dyadic upsampling factors can be achieved, as required for ESS.

From the three prediction techniques generally known from AVC, texture upsampling, motion upsampling and residual upsampling, which are all independent from each other, texture upsampling and residual upsampling are considered. Residual prediction (ie. residual upsampling) can be used if both the BL and the EL use residuals. It can be used additionally to reconstructed texture prediction or without it. The different processing for reconstruction upsampling and residual upsampling that SVC currently uses is maintained.

An aspect of the present invention is to replace, for texture prediction, the AVC 6-tap filter and the following bilinear interpolation filter with a number of 6-tap filters that work simultaneously. The filter coefficients are preferably an approximation of the Lanczos-3 function, as described below. The number of filters corresponds in principle to the upsampling factor, eg. 8 filters for a factor of 8. However since one of the filters is trivial because it maps an integer pel from BL to EL, only k-1 filters are actually used for an upsampling factor of k.

The proposed solution is still separable filtering, which means the upsampling will be done separately in vertical and then horizontal directions. Fig.2 shows the 1-dim case (eg. horizontal or vertical) for texture upsampling, which uses 6-tap filters. In other words, each interpolated EL pixel is generated from six BL pixels. Different filters are used for the half-pel pixel H and two 1/4 pel pixels $Q_1$ and $Q_2$, so that three different 6-tap filters are required.

Fig.3 shows the 1-dimensional case for residual upsampling, which only takes advantage of two neighboring pixels for interpolating half-pel pixels Hr and quarter-pel pixels Q1r, Q2r.

The filtering coefficients for the 6-tap reconstruction filters are obtained from an approximation of a windowed sinc function, being sin(x)/x. This function is symmetric around zero. The lobes of a sinc function are the definition ranges, eg. X=0 to X=pi is a first lobe, X=pi to X=2pi is another lobe. When assigning a number of lobes to a sinc function, only the number of positive (or negative respectively) lobes are counted. Thus, a 3-lobed sinc function is defined in a window from -3pi to 3pi. Substituting X with X-X$_{shift}$ shifts the phase of the function by X$_{shift}$.

The 3-lobed Lanczos-windows sinc function is:

$$\text{Lanczos3}(x) = \begin{cases} \dfrac{\sin(\pi x)\sin(\pi \frac{x}{3})}{\pi x \cdot \pi \frac{x}{3}}, & |x| < 3 \\ 0, & |x| \not\geq 3 \end{cases}$$

Using 4 different phases of the Lanczos3 function, the following filters are obtained for each four pixels E$_0$, Q$_1$, H, Q$_2$ in an upsampled image. Tab.1 shows the filter coefficients (multiplied by 128) for interpolating these four pixels with 6-tap filters.

**Tab.1: Filters for reconstruction upsampling by 4**

| Phase | 6-tap filter coefficients | | | | | |
|---|---|---|---|---|---|---|
| | E[-2] | E[-1] | E[0] | E[1] | E[2] | E[3] |
| 0 | 0 | 0 | 128 | 0 | 0 | 0 |
| 1 | 4 | -17 | 114 | 35 | -9 | 1 |
| 2 | 3 | -17 | 78 | 78 | -17 | 3 |
| 3 | 1 | -9 | 35 | 114 | -17 | 4 |

The filters from Tab.1 need to be normalized by 128:

[0, 0, 128, 0, 0, 0] /128 for E$_0$;
[4, 17, 114, 35, -9, 1] /128 for Q$_1$;
[3, -17, 78, 78, -17, 3]/128 for H;
[1, -9, 35, 114, 17, 4] /128 for Q$_2$;

The filters for phase 1 and phase 3 are symmetric, and the phase for integer is on effect, which means the values for integer pixels remain unchanged and are directly mapped from BL to EL.

For residual upsampling, optimal filters according to the invention are based on average bilinear filtering. When replacing the AVC 6-tap filter by a 2-tap bilinear filter, the result is a composition of two bilinear filters, which is also a bilinear filter, as shown in Tab.2. The filter coefficients in Tab.2 should be normalized by 4, so we have

[4, 0]/4 for E$_0$;
[3, 1] /4 for Q$_1$;
[2, 2]/4 for H;
[1, 3] /4 for Q$_2$;

**Tab.2: Filters for residual upsampling by 4**

| Phase | Bilinear filters | |
|---|---|---|
| | E[0] | E[1] |
| 0 | 4 | 0 |
| 1 | 3 | 1 |
| 2 | 2 | 2 |
| 3 | 1 | 3 |

Thus both filter types, reconstruction interpolation filter and residual interpolation filters, according to the invention are very simple to implement. In particular, each of the sub-pel pixels can be interpolated in a single step; no two-step processing is necessary.

Usually the upsampling filter can be normalized by a small factor to reduce complexity. If the factor is 32, an approximation of the Lanczos3 filters is:

**Tab.3: Filters for reconstruction upsampling by 4 (normalized by 32)**

| Phase | 6-tap filter coefficients | | | | | |
|---|---|---|---|---|---|---|
| | E[-2] | E[-1] | E[0] | E[1] | E[2] | E[3] |
| 0 | 0 | 0 | 32 | 0 | 0 | 0 |
| 1 | 1 | -4 | 28 | 9 | -2 | 0 |
| 2 | 1 | -5 | 20 | 20 | -5 | 1 |
| 3 | 0 | -2 | 9 | 28 | -4 | 1 |

For residual upsampling on MB level, the residual frames are split into MBs and then into motion-compensation (MC) partitions; since the upsampling can not work across the boundary of MC partitions, this solution will influence the pixels at the left and upper boundary in the case of bilinear filters. However, it greatly reduces the encoding/decoding complexity.

For reconstruction upsampling, the quantization error for the pixel position is up to 1/8 and the accuracy is only 1/4. Sometimes more accuracy is required. So it would be advantageous to have solutions that will give an accuracy of 1/6, 1/8 and 1/12. Such filtering solutions are provided in the following.

Tabs.4 and 5 show filtering coefficients of 6-tap filters that interpolate 5 sub-pel pixels between each two upsampled integer pixels, ie. an upsampling factor of 6.

**Tab.4: Filters for reconstruction upsampling by 6 (normalized by 128)**

| Phase | 6-tap filter coefficients | | | | | |
|---|---|---|---|---|---|---|
| | E[-2] | E[-1] | E[0] | E[1] | E[2] | E[3] |
| 0 | 0 | 0 | 128 | 0 | 0 | 0 |
| 1 | 3 | -13 | 121 | 22 | -5 | 0 |
| 2 | 4 | -19 | 104 | 49 | -12 | 2 |
| 3 | 3 | -17 | 78 | 78 | -17 | 3 |
| 4 | 2 | -12 | 49 | 104 | -19 | 4 |
| 5 | 0 | -5 | 22 | 121 | -13 | 3 |

**Tab.5: Filters for reconstruction upsampling by 6 (normalized by 32)**

| Phase | 6-tap filter coefficients | | | | | |
|---|---|---|---|---|---|---|
| | E[-2] | E[-1] | E[0] | E[1] | E[2] | E[3] |
| 0 | 0 | 0 | 32 | 0 | 0 | 0 |
| 1 | 1 | -4 | 31 | 5 | -1 | 0 |
| 2 | 1 | -5 | 27 | 12 | -3 | 0 |
| 3 | 1 | -5 | 20 | 20 | -5 | 1 |
| 4 | 0 | -3 | 12 | 27 | -5 | 1 |
| 5 | 0 | -1 | 5 | 31 | -4 | 1 |

Tab.4 and Tab.5 give filters for 1/6 accuracy upsampling, normalized by 128 and 32 respectively.

**Tab.6: Filters for reconstruction upsampling by 8 (normalized by 128)**

| Phase | 6-tap filter coefficients | | | | | |
|---|---|---|---|---|---|---|
| | E[-2] | E[-1] | E[0] | E[1] | E[2] | E[3] |
| 0 | 0 | 0 | 128 | 0 | 0 | 0 |
| 1 | 3 | -11 | 125 | 15 | -4 | 0 |
| 2 | 4 | -17 | 114 | 35 | -9 | 1 |
| 3 | 4 | -19 | 98 | 56 | -13 | 2 |
| 4 | 3 | -17 | 78 | 78 | -17 | 3 |
| 5 | 2 | -13 | 56 | 98 | -19 | 4 |
| 6 | 1 | -9 | 35 | 114 | -17 | 4 |
| 7 | 0 | -4 | 15 | 125 | -11 | 3 |

**Tab.7: Filters for reconstruction upsampling by 8 (normalized by 32)**

| Phase | 6-tap filter coefficients | | | | | |
|---|---|---|---|---|---|---|
| | E[-2] | E[-1] | E[0] | E[1] | E[2] | E[3] |
| 0 | 0 | 0 | 32 | 0 | 0 | 0 |
| 1 | 1 | -3 | 31 | 4 | -1 | 0 |
| 2 | 1 | -4 | 28 | 9 | -2 | 0 |
| 3 | 1 | -5 | 25 | 14 | -3 | 0 |
| 4 | 1 | -5 | 20 | 20 | -5 | 1 |
| 5 | 0 | -3 | 14 | 25 | -5 | 1 |
| 6 | 0 | -2 | 9 | 28 | -4 | 1 |
| 7 | 0 | -1 | 4 | 31 | -3 | 1 |

Tabs. 6 and 7 give filters for 1/8 accuracy upsampling, normalized by 128 and 32 respectively. Tabs. 8 and 9 give filter for 1/12 accuracy upsampling, normalized by 128 and 32 respectively.

**Tab.8: Filters for reconstruction upsampling by 12 (normalized by 128)**

| Phase | 6-tap filter coefficients | | | | | |
|---|---|---|---|---|---|---|
| | E[-2] | E[-1] | E[0] | E[1] | E[2] | E[3] |
| 0 | 0 | 0 | 128 | 0 | 0 | 0 |
| 1 | 2 | -8 | 126 | 10 | -2 | 0 |
| 2 | 3 | -13 | 121 | 22 | -5 | 0 |
| 3 | 4 | -17 | 114 | 35 | -9 | 1 |
| 4 | 4 | -19 | 104 | 49 | -12 | 2 |
| 5 | 4 | -19 | 92 | 64 | -15 | 2 |
| 6 | 3 | -17 | 78 | 78 | -17 | 3 |
| 7 | 2 | -15 | 64 | 92 | -19 | 4 |
| 8 | 2 | -12 | 49 | 104 | -19 | 4 |
| 9 | 1 | -9 | 35 | 114 | -17 | 4 |
| 10 | 0 | -5 | 22 | 121 | -13 | 3 |

(continued)

| Phase | 6-tap filter coefficients | | | | | |
|---|---|---|---|---|---|---|
| | E[-2] | E[-1] | E[0] | E[1] | E[2] | E[3] |
| 11 | 0 | -2 | 10 | 126 | -8 | 2 |

**Tab.9: Filters for reconstruction upsampling by 12 (normalized by 32)**

| Phase | 6-tap filter coefficients | | | | | |
|---|---|---|---|---|---|---|
| | E[-2] | E[-1] | E[0] | E[1] | E[2] | E[3] |
| 0 | 0 | 0 | 32 | 0 | 0 | 0 |
| 1 | 0 | -2 | 32 | 3 | -1 | 0 |
| 2 | 1 | -4 | 31 | 5 | -1 | 0 |
| 3 | 1 | -4 | 28 | 9 | -2 | 0 |
| 4 | 1 | -5 | 27 | 12 | -3 | 0 |
| 5 | 1 | -5 | 23 | 16 | -4 | 1 |
| 6 | 1 | -5 | 20 | 20 | -5 | 1 |
| 7 | 1 | -4 | 16 | 23 | -5 | 1 |
| 8 | 0 | -3 | 12 | 27 | -5 | 1 |
| 9 | 0 | -2 | 9 | 28 | -4 | 1 |
| 10 | 0 | -1 | 5 | 31 | -4 | 1 |
| 11 | 0 | -1 | 3 | 32 | -2 | 0 |

In all the above, exemplarily shown filters, the phase0 filter is a direct mapping between input and output, corresponding to the Lanczos function (Lanczos3(0)=1). Thus, this "filter" needs not necessarily be implemented as an actual filter.

For residual upsampling, 1/4 pel accuracy is enough. During the conventional residual upsampling process in ESS, a 6-tap filter will first upsample the residual by 2 to get a half-pel picture, and then an average bilinear filter will be used to further upsample the residual by 2 resulting in a Q-pel picture.

After getting the Q-pel residual in the residual prediction process, a pixel of the EL will find its corresponding coordinates based on the upsampling ratio. The coordinates will be quantized into Q-pel accuracy and locate the exact coordinates at the Q-pel residual picture.

Since the upsampled motion is also quantized into 1/4 pel accuracy, it is reasonable to just keep for the upsampled texture also 1/4 pel accuracy. So texture upsampling by 4 is adopted by JVT. An improved filtering method is provided by the present invention.

The present invention improves different texture upsampling schemes particularly for ESS, which requires a texture upsampling factor larger than 4. Filters with coefficients based on the Lanczos function are provided for direct reconstruction upsampling by a factor of 4, and bilinear filters are provided for residual upsampling by a factor of 4. Employing frame level residual upsampling will reduce the encoder and/or decoder complexity.

Besides, 1/6, 1/8 and 1/12 pel accuracy reconstructed frame upsampling filters are also proposed for applications that require high accuracy, but have no strict time constraint.

Another aspect of the invention is to replace, for residual prediction for ESS, the AVC 6-tap filter and the following bilinear interpolation filter with 4 (or rather k-1) simple bilinear interpolation filters, so that half-pel pixels Hr and quarter-pel pixels Q1r, Q2r can be predicted directly from the BL residual pixels E0, E1.

The present invention is applicable to inter-layer texture prediction, ie. predicting the EL from the known BL, and intra-layer texture prediction, ie. predicting quarter-pel pixels from half-pel pixels within the EL, both also in the non-dyadic case. It can be used for both, pixels from intra-coded macroblocks (MBs) and from inter-coded MBs.

An advantage of the invention is that direct interpolation of texture significantly reduces the encoder and/or decoder complexity.

Another advantage is that the invention improves the efficiency of the texture upsampling of ESS. Further, frame level residual upsampling is advantageous for complexity reduction.

Yet another advantage of the invention is that upsampling accuracy is improved. For more accurate reconstructed frame upsampling, 6-, 8- and 12-times upsampling filters are provided. Consequently, coding efficiency can be improved.

In one embodiment of the invention the upsampling factor, i.e. the resolution ratio between BL and EL, is not a power of two, but can be any integer value. In principle it is even possible to achieve non-integer values by not mapping all BL elements directly to EL elements. For the n-times upsampling case, n being an integer, n-1 EL elements are inserted for each BL element. The non-integer case can be achieved when not for each BL element an EL element is inserted. E.g. an upsampling factor of 2.5 can be achieved when 5 EL pixels are inserted for each other BL pixels.

The invention can be used for video encoding and decoding procedures and products when multiple video layers are involved. The invention is particularly advantageous when the resolution ratio between different spatial layers is non-dyadic.

**Claims**

1. Method for interpolating elements (Q1,H,Q2) of an enhancement-layer (EL) image from elements (E-2,E-1, E0,E1,E2,E3) of a base-layer (BL) image, wherein the EL has higher resolution than the BL, comprising the steps of

   - upsampling said elements (E-2, E-1, E0, E1, E2, E3) of the BL image for usage as upsampled elements of the EL image;
   - if the BL image is a reconstructed image, predicting according to a given upsampling factor further elements (Q1,H,Q2) of the EL image by a first interpolation based on n of said elements (E-2,E-1,E0,E1,E2,E3) of the BL image, with n being two or more, wherein the predicted further elements (Q1, H, Q2) are positioned between said upsampled elements, and wherein for the further elements (Q1, H, Q2) different interpolation filters are used, and wherein the respective filter coefficients approximate a windowed sinc (sin (x) /x) based function.

2. Method according to claim 1, wherein the resolution ratio between BL and EL is not a power of two.

3. Method according to claim 1 or 2, wherein said upsampled elements are in the same line of the EL image and the predicted further elements (Q1, H, Q2) are adjacent to each other and are positioned between two of said upsampled elements.

4. Method according to any of the preceding claims, wherein the coefficients of each of the filters approximate different phases of the same function.

5. Method according to any of the preceding claims, wherein the coefficients of each of the filters approximate a 3-lobed Lanczos windowed sinc function (Lanczos-3) of the form

$$\text{Lanczos}\,3(x) = \begin{cases} \dfrac{\sin(\pi\,x)\sin(\pi\,\frac{x}{3})}{\pi\,x \cdot \pi\,\frac{x}{3}}, & |x|{<}3 \\ 0, & |x|{\geq}3 \end{cases}$$

6. Method according to any of the preceding claims, wherein n is 6 independent from the upsampling factor.

7. Method according to any of the preceding claims, wherein the upsampling factor is 6 and the filter coefficients, when normalized to 128, are approximately

| Phase | E[-2] | E[-1] | E[0] | E[1] | E[2] | E[3] |
|-------|-------|-------|------|------|------|------|
| 0 | 0 | 0 | 128 | 0 | 0 | 0 |
| 1 | 3 | -13 | 121 | 22 | -5 | 0 |
| 2 | 4 | -19 | 104 | 49 | -12 | 2 |

(continued)

| Phase | E[-2] | E[-1] | E[0] | E[1] | E[2] | E[3] |
|---|---|---|---|---|---|---|
| 3 | 3 | -17 | 78 | 78 | -17 | 3 |
| 4 | 2 | -12 | 49 | 104 | -19 | 4 |
| 5 | 0 | -5 | 22 | 121 | -13 | 3 |

or wherein the upsampling factor is 8 and the filter coefficients, when normalized to 128, are approximately

| Phase | E[-2] | E[-1] | E[0] | E[1] | E[2] | E[3] |
|---|---|---|---|---|---|---|
| 0 | 0 | 0 | 128 | 0 | 0 | 0 |
| 1 | 3 | -11 | 125 | 15 | -4 | 0 |
| 2 | 4 | -17 | 114 | 35 | -9 | 1 |
| 3 | 4 | -19 | 98 | 56 | -13 | 2 |
| 4 | 3 | -17 | 78 | 78 | -17 | 3 |
| 5 | 2 | -13 | 56 | 98 | -19 | 4 |
| 6 | 1 | -9 | 35 | 114 | -17 | 4 |
| 7 | 0 | -4 | 15 | 125 | -11 | 3 |

or wherein the upsampling factor is 12 and the filter coefficients, when normalized to 128, are approximately

| Phase | E[-2] | E[-1] | E[0] | E[1] | E[2] | E[3] |
|---|---|---|---|---|---|---|
| 0 | 0 | 0 | 128 | 0 | 0 | 0 |
| 1 | 2 | -8 | 126 | 10 | -2 | 0 |
| 2 | 3 | -13 | 121 | 22 | -5 | 0 |
| 3 | 4 | -17 | 114 | 35 | -9 | 1 |
| 4 | 4 | -19 | 104 | 49 | -12 | 2 |
| 5 | 4 | -19 | 92 | 64 | -15 | 2 |
| 6 | 3 | -17 | 78 | 78 | -17 | 3 |
| 7 | 2 | -15 | 64 | 92 | -19 | 4 |
| 8 | 2 | -12 | 49 | 104 | -19 | 4 |
| 9 | 1 | -9 | 35 | 114 | -17 | 4 |
| 10 | 0 | -5 | 22 | 121 | -13 | 3 |
| 11 | 0 | -2 | 10 | 126 | -8 | 2 |

8. Method according to any of the preceding claims, further comprising the step

- if the BL image is a residual image, predicting further elements (Q1r, Hr, Q2r) of the EL residual image by a bilinear interpolation of the BL image using two-tap filters.

9. Apparatus for interpolating elements (Q1,H,Q2) of an enhancement-layer (EL) image from elements (E-2, E-1,E0,E1,E2,E3) of a base-layer (BL) image, wherein the EL has higher resolution than the BL, comprising

- means for upsampling said elements (E-2,E-1,E0,E1, E2,E3) of the BL image for usage as upsampled elements of the EL image; and

- means for predicting according to a given upsampling factor further elements (Q1, H, Q2) of the EL image, if the BL image is a reconstructed image, by a first interpolation based on n of said elements (E-2,E-1,E0,E1,E2,E3) of the BL image, with n being two or more, wherein the predicted further elements (Q1, H, Q2) are positioned between said upsampled elements, and wherein for the further elements (Q1, H, Q2) different interpolation filters are used, and wherein the respective filter coefficients approximate a windowed sinc (sin (x) /x) based function.

**10.** Apparatus according to the preceding claim, wherein the coefficients of each of the filters approximate a 3-lobed Lanczos windowed sinc function (Lanczos-3) of the form

$$\mathrm{Lanczos}\,3(x) = \begin{cases} \dfrac{\sin(\pi x)\sin(\pi\,\frac{x}{3})}{\pi\,x \cdot \pi\,\frac{x}{3}}, & |x| < 3 \\[2mm] 0, & |x| \geq 3 \end{cases}$$

WxH

Direct upsampling by 4

X S1

6-tap

Sd

S2 X

Bilinear

2Wx2H

4Wx4H

**Fig.1**

Q1    H    Q2

| E-2 | | E-1 | | E0 | Q1 | H | Q2 | E1 | | E2 | | E3 |

**Fig.2**

| E0 | Q1r | Hr | Q2r | E1 |

**Fig.3**

| E-2 | E-1 | E0 | E1 | E2 | E3 | | E0 | Q1 | H | Q2 |

F0

Phase 0

F1

Phase 1

F2

Phase 2

F3

Phase 3

**Fig.4**

**European Patent Office**

**EUROPEAN SEARCH REPORT**

Application Number

EP 05 30 0818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN S & FRANCOIS E: "Extended Spatial Scalability with picture-level adaptation" JOINT VIDEO TEAM (JVT) OF ISO/IEC MPEG & ITU-T VCEG (ISO/IEC JTC1/SC29/WG11 AND ITU-T SG16 Q6), JVT-0008, 15TH MEETING, BUSAN, KR, 16-22 APRIL 2005, April 2005 (2005-04), pages 1-20, XP002347764 * page 2, paragraph 2; figure 2 * * pages 7-9, paragraph 4 * | 1-10 | H04N7/26 H04N7/46 H04N7/50 G06T5/00 G06T5/20 |
| X | FRANÇOIS E. ET AL.: "Extended Spatial Scalability" ISO/IEC JTC1/SC29/WG11, MPEG2005/M11669, HONG KONG, CHINA, 17-21 JANUARY 2005, January 2005 (2005-01), pages 1-17, XP002372036 * pages 3-5, paragraphs 1,2; figures 1,2 * * pages 10-12, paragraph 4 * | 1-10 | |
| A | BOVIK A (EDITOR): "Handbook of image and video processing" PASSAGE, 2000, pages 636-638, XP002372037 SAN DIEGO, CA, ACADEMIC PRESS, US ISBN: 0-12-119790-5 * page 637 - page 638, paragraph 4.1 * | 1-10 | **TECHNICAL FIELDS SEARCHED (IPC)** H04N G06T |
| A | WEDI T.: "Complexity Reduced Motion Compensated Prediction with 1/8-pel Displacement Vector Resolution" ITU-T VCEG, ITU-T SG16 Q6, VCEG-L20, 12TH MEETING, EIBSEE, GERMANY, 9-12 JANUARY 2001, January 2001 (2001-01), pages 1-9, XP002372038 * pages 1-3, paragraph 1-3 * | 1-10 | |

-/--

The present search report has been drawn up for all claims

| Place of search | Date of completion of the search | Examiner |
|---|---|---|
| The Hague | 14 March 2006 | Lombardi, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 30 0818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WEDI T.: "Motion and Aliasing Compensated prediction for H.26L" ITU-T VCEG, ITU-T SG16 Q15), Q15I35, 9TH MEETING, RED BANK, NJ, USA, 19-22 OCTOBER 1999, October 1999 (1999-10), pages 1-6, XP002372039 * pages 1-3, paragraph 1-5 * ----- | 1-10 | |

TECHNICAL FIELDS SEARCHED (IPC)

The present search report has been drawn up for all claims

| Place of search | Date of completion of the search | Examiner |
|---|---|---|
| The Hague | 14 March 2006 | Lombardi, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 05075870 A